# NEUE EUROPÄISCHE PATENTSCHRIFT

(11) **EP 0 901 419 B2**
(45) Veröffentlichungstag und Bekanntmachung des Hinweises auf die Entscheidung über den Einspruch: **10.11.2004**
(45) Hinweis auf die Patenterteilung: 19.09.2001
(21) Anmeldenummer: 97921713.0
(22) Anmeldetag: 23.04.1997
(51) Int. Cl.: B60G 17/04, B60G 17/015, F04B 49/06, F04B 49/10

(54) **LUFTFEDERUNG**
PNEUMATIC SUSPENSION
SUSPENSION PNEUMATIQUE

(30) Priorität: 31.05.1996 DE 19621946
(43) Veröffentlichungstag der Anmeldung: 17.03.1999
(73) Patentinhaber: DaimlerChrysler AG, 70567 Stuttgart (DE)
(72) Erfinder: HORWATH, Jochen, D-72669 Unterensingen (DE)
(86) Internationale Anmeldenummer: PCT/EP1997/002059
(87) Internationale Veröffentlichungsnummer: WO 1997/046404

(56) Entgegenhaltungen:
- DE-A- 3 919 407
- DE-A- 4 030 475
- DE-A- 4 038 080
- DE-A- 4 333 591
- DE-C- 3 130 874
- GB-A- 2 223 331
- US-A- 4 462 610
- PATENT ABSTRACTS OF JAPAN vol. 009, no. 003 (M-349), 9.Januar 1985 & JP 59 155584 A (ATSUGI JIDOUSHIYA BUHIN KK), 4.September 1984,
- PATENT ABSTRACTS OF JAPAN vol. 095, no. 002, 31.März 1995 & JP 06 320928 A (AISIN SEIKI CO LTD;OTHERS: 01), 22.November 1994,

## Beschreibung

Die Erfindung betrifft eine Luftfederung gemäß dem Oberbegriff des Anspruches 1.

Luftfederungen für Kraftfahrzeuge sind grundsätzlich bekannt und werden serienmäßig eingesetzt. In der Regel ist druckseitig des Kompressors ein pneumatischer Druckspeicher vorgesehen, der vom Kompressor ständig auf einem Ladedruck gehalten wird, welcher deutlich oberhalb der Betriebsdrücke der Luftfederaggregate bzw. -bälge liegt. Hier arbeitet der Kompressor in der Regel nur dann, wenn der Druckspeicher nachgeladen werden muß, wobei die Leistung des Kompressors unterhalb einer bei einer Bedarfsspitze der Luftfederung liegenden Spitzenleistung liegen kann, weil durch den Druckspeicher immer ein hinreichender Druckvorrat sichergestellt wird.

Es wurde auch schon versucht, den Druckspeicher bei Luftfederungen zu erübrigen und die Luftfederaggregate bzw. - bälge bei Bedarf direkt vom Kompressor aus mit Druckluft zu speisen. Dies ist insbesondere dann möglich, wenn die Luftfüllung der Luftfederaggregate im wesentlichen nur bei einer Absenkung bzw. Anhebung des Niveaus des Fahrzeugaufbaus, nicht aber bei normalen Federhüben verändert wird.

Die US 4 462 610 zeigt eine derartige gattungsbildende Luftfederung mit durch Elektromotor bedarfsabhängig angetriebenem Kompressor, welcher gegebenenfalls auch direkt mit den Luftfederaggregaten bzw. -bälgen verbunden werden kann. Nach dieser Druckschrift wird die Betriebstemperatur eines den Kompressor antreibenden Elektromotors mittels Temperaturfühler überwacht, wobei dann eine den Elektromotor ein- bzw. abschaltende Steuereinheit, die einen bedarfsgerechten Betrieb des Kompressors gewährleisten soll, den Motor ausschaltet, wenn dessen Betriebstemperatur einen oberen Schwellwert überschreitet bzw. den Motor einschaltet oder einzuschalten gestattet, wenn die Betriebstemperatur unter einen unteren Schwellwert fällt.

Aus der GB 2 223 331 A ist es bekannt, die Betriebstemperatur eines einen Kompressor antreibenden Elektromotors rechnerisch aus dem Motorstrom zu ermitteln. In Abhängigkeit von der ermittelten Temperatur werden Motor und Kompressor entweder stillgesetzt oder auf Leerlaufbetrieb umgesteuert, sobald das vom Kompressor gespeiste Drucksystem seinen Maximaldruck erreicht hat. Auf diese Weise soll ein häufiges Einund Ausschalten des Elektromotors im Bereich hoher Temperaturen vermieden werden. Hier wird berücksichtigt, dass solche Schaltvorgänge die Motortemperatur stark erhöhen können.

In der DE 43 33 591 A1 wird die Steuerung eines einen Kompressor einer Kraftfahrzeug-Luftfederung antreibenden Motors mit Rechnersimulation zur Motortempetaturabschätzung beschieben, bei der aufeinanderfolgende Betriebs- und Pausenzeiten gewichtet gegeneinander aufgerechnet werden, d.h. der Betrag der errechneten Temperatur ändert sich im wesentlichen analog der Zeitdifferenz, um die die summierten Betriebszeiten die summierten gewichteten Pausenzeiten übersteigen.

Bei einer aus der DE 40 30 475 A1 bekannten Motorsteuerung werden für die rechnerische Abschätzung der Temperatur eines Motors eine Kennkurve für den Temperaturanstieg bei Betrieb sowie eine Kennkurve für den Temperaturabfall bei Betriebsunterbrechung des Motors berücksichtigt.

Beide vorgenannten Steuerungen schalten den Motor ab, sobald die errechnete Motortemperatur einen Schwellwert übersteigt. Eine erneute Einschaltung ist erst nach einer vorgegebenen Zeitspanne oder errechneten Abkühlung möglich.

Die Belastbarkeit des Kompressors muß entsprechend dem jeweiligen Bedarf bemessen sein. Während der Fahrt braucht eine Überlastung nicht befürchtet zu werden, da dann lediglich geringfügige Niveauänderungen auftreten bzw. allenfalls geringfügige Leckagen zu berücksichtigen sind.

Grundsätzlich andere Verhältnisse können jedoch vorliegen, wenn die Luftfederung die Möglichkeit bietet, das Fahrzeug im Stand anzuheben bzw. abzusenken oder beladungsunabhängig auf einem vorgegebenen Niveau zu halten. Hier kann der Kompressor gegebenenfalls - auch durch unsachgemäße Nutzung der Möglichkeiten zur Niveauänderung - äußerst stark belastet werden.

Deshalb ist es Aufgabe der Erfindung, eine vorteilhafte Überlastsicherung des Kompressors zu schaffen.

Diese Aufgabe wird bei einer Luftfederung der eingangs angegebenen Art durch die kennzeichnenden Merkmale des Anspruches 1 gelöst.

Die Erfindung beruht auf dem allgemeinen Gedanken, die bei Luftfederungen der eingangs angegebenen Art ohnehin wünschenswerte bzw. notwendige rechnergestützte Steuerung des Kompressors so zu installieren, daß sich die Betriebstemperatur des Kompressors aufgrund von Erfahrungswerten abschätzen läßt. Da die Steuerung den Kompressor ein- bzw. abschaltet, "kennt" sie die Betriebsabläufe und damit auch den Belastungszustand des Kompresssors. Darüber hinaus wird der Schätzwert mit hinreichender "Vorsicht" bestimmt, so daß die tatsächliche Betriebstemperatur des Kompressors mit an Sicherheit grenzender Wahrscheinlichkeit unterhalb des Schätzwertes liegt.

Ein besonderer Vorteil der Erfindung ist darin zu sehen, daß keinerlei zusätzliche Sensoren und keinerlei zusätzliche Signaleingänge an der Steuerung zur Überwachung des Betriebes des Kompressors benötigt werden. Dementsprechend braucht auch mit Defekten an derartigen Teilen nicht gerechnet zu werden.

Gemäß einer bevorzugten Ausführungsform der Erfindung wird für den Schätzwert ein Mindestwert vorgegeben. Dieser Mindestwert - z.B. 40°C - orientiert sich an der zu erwartenden maximalen Umgebungstemperatur des Fahrzeuges od.dgl.

Des weiteren ist zweckmäßigerweise vorgesehen, dass das Maß des Temperatursprunges, um den der jeweils letzte Schätzwert beim Einschalten des Kompressors erhöht wird, von der Höhe des letzten Schätzwertes abhängt. Nach einem längeren Stillstand, d.h. wenn die Temperatur des Kompressors auf eine relativ geringe Temperatur abgefallen ist, steigt die Betriebstemperatur nach dem Start des Kompressors in relativ kurzer Zeit deutlich an. Dieser Anstieg verlangsamt sich im Bereich der typischen Betriebstemperaturen des Kompressors. Dies kann bei der Bemessung der zu berechnenden Temperatursprünge beim Einschalten des Kompressors berücksichtigt werden.

Während eines Kompressorbetriebes wird der Schätzwert mit einem vorgegebenen bzw. vorgebbaren positiven Gradienten erhöht.

Bei Stillstand des Kompressors wird der Schätzwert mit vorgegebenem bzw. vorgebbarem negativen Gradienten abgesenkt.

Dies kann beispielsweise dadurch erfolgen, daß der Schätzwert jeweils nach einer vorgebbaren Zeitspanne um eine vorgegebene geringe Temperaturdifferenz erhöht bzw. erniedrigt wird.

Wird das Fahrzeug stillgesetzt, insbesondere unter Betätigung einer Wegfahrsperre, arbeitet der Rechner noch für eine vorgegebene Zeitspanne - z.B. fünf Minuten - weiter, um einen aktuellen Schätzwert der Temperaturdes Kompressors zu bestimmen und diesen Schätzwert bei einem nachfolgenden Betrieb des Kompressors als Anfangswert der Temperatur berücksichtigen zu können. Nurwenn das Fahrzeug für eine längere Zeitspanne stillgesetzt war, beginnt die Berechnung der Temperatur mit dem obengenannten, vorgegebenen Mindestwert von z.B. 40°C.

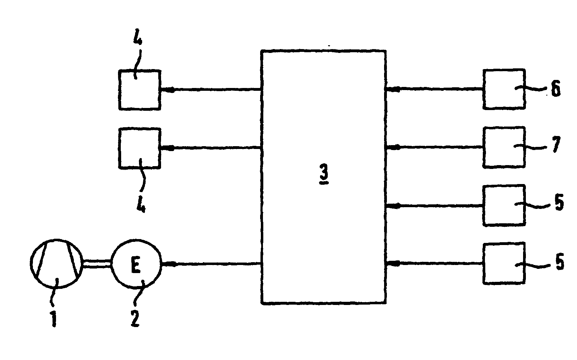

Im übrigen wird hinsichtlich bevorzugter Merkmale der Erfindung auf die Ansprüche sowie die nachfolgende Erläuterung der Zeichnung verwiesen, anhand der eine bevorzugte Ausführungsform beispielhaft beschrieben wird.

Dabei zeigt die einzige Figur eine Teildarstellung eines Luftfedersystems in Form eines Blockschaltbildes.

Das nicht näher dargestellte Luftfedersystem besitzt einen Kompressor 1, welcher durch einen Elektromotor 2 angetrieben wird. Dieser Motor 2 wird automatisch, parameterabhängig durch eine rechnergestützte Steuerschaltung 3 ein- bzw. ausgeschaltet, welche auch die Stellorgane von nicht dargestellten Ventilen 4 des Luftfedersystems betätigt.

Eingangsseitig ist die Steuerschaltung 3 mit Gebern 5 verbunden, die beispielsweise die Vertikalabstände zwischen einem Fahrzeugaufbau und Fahrzeugrädem und damit das Aufniveau erfassen, so daß die Steuerschaltung 3 durch Soll-Istwert-Vergleich ein gewünschtes Niveau einzusteilen bzw. einzuhalten vermag, indem der Elektromotor 2 und damit der Kompresssor 1 bedarfsgerecht ein- bzw. ausgeschaltet und die Ventile 4 in entsprechender Weise betätigt werden.

Im übrigen ist die Steuerschaltung 3 eingangsseitig mit einem manuell betätigbaren Befehlsgeber 6 verbunden, der beispielsweise an einem Fahrerplatz eines Fahrzeuges und/oder an einer Fahrzeugtür, beispielsweise Heckklappe, angeordnet sein kann und durch dessen Betätigung ein Sollniveau, auch bel stehendem Fahrzeug vorgegeben werden kann. Damit besteht beispielsweise die Möglichkeit, die Be- bzw. Entladung eines Fahrzeuges durch Anhebung bzw. Absenkung des Aufbauniveaus zu erleichtern.

Schließlich erhält die Steuerschaltung 3 ein Signal, sobald eine vorzugsweise elektronische Wegfahrsperre 7 des Fahrzeuges wirksam wird.

Da die Steuerschaltung 3 die Betriebszeiten sowie die Einschaltzeiten bzw. die Betriebspausen des Elektromotors 2 und damit des Kompressors 1 "kennt", besteht die Möglichkeit, unter Ausnutzung von Erfahrungswerten mittels des der Steuerschaltung 3 zugeordneten Rechners Schätzwerte für die Betriebstemperatur des Kompressors 1 zu ermitteln, wie es eingangs dargelegt wurde.

Auf diese Weise ist ein Überlastschutz des Kompressors 1 gewährleistet, ohne daß dazu gesonderte Sensoren und diesen Sensoren zugeordnete besondere Eingänge an der Steuerschaltung 3 notwendig sind.

## Patentansprüche

1. Luftfederung eines Kraftfahrzeugs, die einen bedarfsabhängig ein- und ausschaltbaren Kompressor (1), welcher bei Normalbetrieb der Luftfederung nur intermittierend, mit länger dauernden Betriebsunterbrechungen, ohne daß eine Überlastung zu befürchten ist zu arbeiten braucht, aufweist und die Möglichkeit bietet, das Fahrzeug im Stand anzuheben bzw. abzusenken oder beladungsunabhängig auf einem vorgegebenen Niveau zu halten, wobei eine den Kompressor (1) einund abschaltende Steuereinheit (3) den Kompressor (1) abschaltet, wenn eine Betriebstemperatur einen oberen Schwellwert überschreitet, sowie den Kompressor (1) einschaltet oder einzuschalten gestattet, wenn eine Betriebstemperatur einen unteren Schwellwert unterschreitet,
**dadurch gekennzeichnet,**
**dass** die Steuereinheit (3) einen Rechner umfasst, welcher ohne zusätzliche Sensoren bzw. Temperaturfühler einen Schätzwert der Betriebstemperatur des Kompressors (1) aufgrund von Erfahrungswerten berechnet, und
**dass** die Steuereinheit (3) in Abhängigkeit von diesem Schätzwert arbeitet, wobei der jeweils letzte Schätzwert beim Einschalten des Kompressors (1) um einen vorgegebenen Temperatursprung erhöht wird.

2. Luftfederung nach Anspruch 1,
**dadurch gekennzeichnet,**
**dass** das Maß des Temperatursprungs von der Höhe des letzten Schätzwertes abhängt.

3. Luftfederung nach Anspruch 1 oder 2,
**dadurch gekennzeichnet,**
**dass** für den Schätzwert ein Mindestwert vorgegeben ist.

4. Luftfederung nach einem der Ansprüche 1 bis 3,
**dadurch gekennzeichnet ,**
**dass** der Schätzwert während eines Kompressorbetriebes mit einem vorgegebenen positiven Gradienten erhöht und bei Stillstand des Kompressors mit einem vorgegebenen negativen Gradienten abgesenkt wird.

5. Luftfederung nach Anspruch 4,
**dadurch gekennzeichnet,**
**dass** der Schätzwert jeweils nach einer vorgegebenen Zeitspanne um eine vorgegebene geringe Temperaturdifferenz erhöht oder erniedrigt wird.

6. Luftfederung einem der Ansprüche 1 bis 5,
**dadurch gekennzeichnet,**
**dass** der Rechner den Schätzwert der Temperatur nach Stillsetzen des Fahrzeuges noch für eine Zeitspanne aktualisiert.

## Claims

1. Air-suspension, of a vehicle, that has compressor (1) that can be switched on and off according to need and which, during normal running of the air suspension, only needs to operate intermittently, with long interruptions in functioning, without risk of overloading, and that offers the possibility of lifting or lowering the level of a vehicle concerned or of keeping it at a set level on the basis of the loading on the given vehicle, whereby a control unit (3), which switches the compressor (1) on and off, switches the compressor (1) off if an operating temperature exceeds an upper threshold value, and switches the compressor on or allows a compressor concerned to be switched on, if an operating temperature falls below a lower threshold value,
**characterized in that**
the control unit (3) comprises a computer which, on the basis of recorded values, calculates an estimated value of the operating temperature of the compressor (1), without additional detectors or temperature sensors, and **in that** the control unit (3) operates on the basis of this estimated value, whereby the given, last estimated value at the time of switching-on ofthe compressor (1) is increased by a set rise in temperature.

2. Air-suspension in accordance with claim 1,
**characterized in that**
the extent of the rise in temperature depends on the level of the last estimated value.

3. Air-suspension in accordance with claim 1 or 2,
**characterized in that**
a minimum value for the estimated value is set.

4. Air-suspension in accordance with any one of claims 1 to 3,
**characterized in that**
the estimated value is increased by a set, linear increase during a given functioning of the compressor, and is decreased by a set, linear decrease, when the compressor is idle.

5. Air-suspension in accordance with any one of claim 4,
**characterized in that**
the estimated value is in each case increased or decreased by a set, low temperature difference, after a set period of time.

6. Air-suspension in accordance with any one of claims 1 to 5,
**characterized in that**
the computer, for a certain time-period, still updates the estimated value of the temperature after a vehicle concerned has comes to a standstill.

## Revendications

1. Suspension pneumatique d'un véhicule automobile, présentant un compresseur susceptible d'être mis en service et hors service selon les besoins, et qui, lors du fonctionnement normal de la suspension pneumatique peut travailler de façon uniquement intermittente, avec de longues interruptions de fonctionnement, sans que l'on ait à redouter de surcharge, et qui offre la possibilité de soulever ou abaisser le véhicule à l'arrêt ou de le maintenir à un niveau, quelle que soit la charge, une unité de commande (3) qui met le compresseur (1) en et hors service procédant à la mise hors service du compresseur (1) lorsqu'une température de fonctionnement dépasse une valeur seuil supérieure ou procédant à la mise en service du compresseur (1) ou permettant sa mise en service lorsqu'une température de fonctionnement descend au-dessous d'une valeur seuil inférieure,
**caractérisée en ce que**
l'unité de commande (3) comprend un calculateur qui, sans capteurs ou sondes de température supplémentaires, calcule une valeur estimée de la température de fonctionnement du compresseur (1) en se basant sur des valeurs empiriques, et
**en ce que** l'unité de commande (3) travaille en fonction de cette valeur estimée, la dernière valeur estimée lors de la mise en service du compresseur (1) étant augmentée d'un saut de température prédéterminé.

2. Suspension pneumatique selon la revendication 1, **caractérisée en ce que** l'ampleur du saut de température dépend de la hauteur de la dernière valeur estimée.

3. Suspension pneumatique selon la revendication 1 ou 2, **caractérisée en ce qu'**une valeur minimale est prédéterminée pour la valeur estimée.

4. Suspension pneumatique selon l'une des revendications 1 à 3, **caractérisée en ce que** la valeur estimée est augmentée pendant le fonctionnement du compresseur avec un gradient positif prédéterminé et est diminuée pendant l'arrêt du. compresseur avec un gradient négatif prédéterminé.

5. Suspension pneumatique selon la revendication 4, **caractérisée en ce qu'**après un intervalle de temps prédéterminé la valeur estimée est augmentée ou abaissée chaque fois d'une faible différence de température prédéterminée.

6. Suspension pneumatique selon l'une des revendications 1 à 5, **caractérisée en ce que**, après immobilisation du véhicule, le calculateur continue à actualiser la valeur estimée de la température, pendant un intervalle de temps.
